# EUROPEAN PATENT APPLICATION

(11) **EP 3 205 393 A1**
(43) Date of publication of application: **16.08.2017**
(21) Application number: 16155482.9
(22) Date of filing: 12.02.2016
(51) Int. Cl.: B01J 13/14

(54) **PROCESS FOR PREPARATION OF MICROCAPSULES**

(71) Applicant: BASF SE, 67056 Ludwigshafen am Rhein (DE)
(72) Inventor: The designation of the inventor has not yet been filed
(74) Representative: BASF IP Association

(57) **Abstract**

Process for the preparation of microcapsules comprising the steps
(a) preparation of an aqueous biphasic system by mixing
(i) component (a1) comprising a component A selected from the group of polymers consisting of polyethylene glycol vinyl acetate comb polymers, polycarboxylates, polyethers, polyaspartates, polyvinylpyrrolidone, polyamines, and polylysine;
wherein component (a1) is a monophasic system at 23°C, and forms a monophasic system at 23°C if mixed with water in the range of from 1:99 to 99:1 by weight, and
(ii) component (a2) containing water and a water-soluble component B, wherein water-soluble component B is different from component A, and wherein (a2) is a monophasic system at 23°C, and
(iii) at least one monomer (a3), and
(iv) optionally at least one initiator (a4),
wherein (a1), (a2), (a3), and (a4) can be mixed together in any order or simultaneously, followed by
(b) optionally shearing of the biphasic system to form an emulsion, and
(c) polymerization of monomer (a3).

## Description

The present invention relates to a process for the preparation of microcapsules.

The present invention also relates to a process for encapsulating enzymes in microcapsules, and to microcapsules prepared according to said process.

The present invention further relates to aqueous dispersions of water-containing microcapsules comprising at least one enzyme prepared according to said process.

The present invention discloses a process for encapsulation of at least one polymer which acts as active ingredient or of at least one polymer in combination with at least one enzyme acting as active ingredient. By encapsulation of active ingredients using emulsion-based reactive microencapsulation technology the application range of these active ingredients can be expanded. For example encapsulation of enzymes provides enhanced stability of the enzymes in formulations and prevents enzymes to interact with other ingredients of the formulation before the actual application.

Two main technologies are known emulsion-based reactive microencapsulation: oil-in-water and water-in-oil microencapsulation. The first one (oil-in-water microencapsulation) is commonly used to encapsulate non-polar active ingredients. The second one (water-in-oil microencapsulation) is employed for the encapsulation of polar (i.e. water soluble) actives. For water-in-oil microencapsulation water soluble actives are emulsified in a hydrophobic phase (e.g. in an oil) in the presence of wall building components (e.g. monomers or reactive polymers). When applying water-in-oil encapsulation techniques to enzymes, the enzymes must be able to exist in the presence of the hydrophobic phase of an organic/aqueous biphasic system without denaturation, which is not easily achieved. By reaction of the building components microcapsules containing the active ingredient dispersed in the hydrophobic phase are obtained. However, for some microcapsules containing product formulations, hydrophobic solvents such as for example mineral oils (paraffinic, naphthenic and aromatic), n-hexane, and cyclohexane are a serious disadvantage because of toxicological, regulatory, or environmental reasons.

In addition to water-in-oil and oil-in-water systems water-in-water (aqueous biphasic) systems are known. Water-in-water systems can be obtained by inducing phase separation in an aqueous system containing a water-soluble polymer by for example addition of a salt, resulting in an aqueous phase containing the water-soluble polymer and another aqueous phase containing the dissolved salt. These water-in-water emulsion systems are mainly used for isolation and purification of enzymes.

Aqueous biphasic systems containing polyvinyl alcohol and dextran are known for stabilization and encapsulation of proteins during spray drying (ELVERSSON, J., MILLQVIST-FUREBY, A. Journal of Pharmaceutics 2005, volume 294(1-2), pages 73-87).

Salting-out effects of electrolytes on polymers in aqueous biphasic systems are described for a series of eight electrolytes and polyethylene glycol (HEY, M., JACKSON, D., DANIEL, P., YAN, H. Polymer 2005, volume 46(8), pages 2567-2572).

JP48043421 teaches the microencapsulation of water-soluble inorganic compounds such as ammonium sulfate, sodium chloride or sodium carbonate with organic hydroxyl compounds such as polyvinyl alcohol in organic solvents such as toluene.

JP50148584 teaches the microencapsulation of enzyme preparations in water-in-oil systems containing sugars, salts, process additives such as ethyl cellulose and monomers such as styrene. Enzyme microcapsules are obtained after polymerization and evaporation of the solvents.

CN102532375 describes the preparation of polyacrylamide microspheres by water-in-water polymerization in an inorganic saline solution, with linear polymers as stabilizer and acrylamide as base monomer.

US 2009/0269333 discloses non-amphiphile-based water-in-water emulsion compositions comprising a water-soluble polymer encapsulating a non-amphiphile lyotropic mesogene.

There is a need for an encapsulation technique which can be applied to a wide range of active ingredients without the disadvantages of a hydrophobic (oil) component in the final system.

There is also a need for a process for encapsulation of a wide range of active ingredients. Even though proteins can be stabilized in aqueous biphasic systems so that the resulting system can be spray-dried and encapsulated proteins can be obtained while spray-drying resp. for encapsulation of special substances like lyotropic mesogenes, a more general process for preparation of encapsulated materials out of aqueous biphasic systems is missing. Purification of enzymes by utilization of aqueous biphasic systems is well known, but no process exists to encapsulate enzymes in said systems.

It was the object of the present invention to comply with such needs.

The technical solution is provided by the present invention as described herein below and defined in the claims.

To obtain microcapsules according to the present invention, the process for the preparation of microcapsules comprising the following steps is carried out:
(a) preparation of an aqueous biphasic system by mixing
   (i) component (a1) comprising a component A selected from the group of polymers consisting of polyethylene glycol vinyl acetate comb polymers, polycarboxylates, polyethers, polyaspartates, polyvinylpyrrolidone, polyamines, and polylysine;
      wherein component (a1) is a monophasic system at 23°C, and forms a monophasic system at 23°C if mixed with water in the range of from 1:99 to 99:1 by weight, and
   (ii) component (a2) containing water and a water-soluble component B, wherein water-soluble component B is different from component A, and wherein (a2) is a monophasic system at 23°C, and
   (iii) at least one monomer (a3), and
   (iv) optionally at least one initiator (a4),
   wherein (a1), (a2), (a3), and (a4) can be mixed together in any order or simultaneously, followed by
(b) optionally shearing of the biphasic system to form an emulsion, and
(c) polymerization of monomer (a3).

Microcapsules obtained by the process of this invention are practicable free of hydrophobic solvents like for examples oils. The absence of hydrophobic solvents makes the utilization of the encapsulated active ingredients in applications which have been currently not accessible because of toxicological, regulatory or environmental restrictions possible. A large variety of active ingredients not compatible with hydrophobic solvents currently used for encapsulation become available for encapsulation with the process of this invention. Additionally, substances which currently cannot be encapsulated because of their sensitivity towards a solvent or the reaction conditions can be encapsulated using the process according to the present invention because of the mild reaction conditions applied and the limitation to water as the only solvent in the process.

In the context of this invention, the term active ingredient is understood as a substance, which when applied in an application improves at least one of the results obtained during said application compared to when the substance would not be applied in said application. Examples are enzymes.

A microcapsule according to the invention may comprise any particle which is at least composed of the polymer of component A, and the polymer formed out of at least one monomer (a3) during polymerization. In one embodiment the microcapsule may comprise a core-shell capsule, with the core comprising polymer component A and the shell comprising the polymer formed out of at least one monomer (a3) during polymerization. In another embodiment the microcapsule may comprise a continuous matrix structure with polymer component A and the polymer formed out of at least one monomer (a3) during polymerization distributed over the whole volume of the particle. The distribution of the at least two polymers may be either homogenous or heterogeneous throughout the volume of the particle.

The term aqueous biphasic system according to this invention describes a system in which two separate aqueous phases can be observed in one system. The aqueous biphasic system forms during or after mixing of the two components (a1) and (a2). A stable emulsion forms either spontaneously during mixing of the separate phases or by applying shear force. The shear rate for the preparation of the emulsion may lie in the range of from 150 to 20000 rpm, the stirring time for the preparation of the emulsion may lie in the range of from 1 min to 180 min and an anchor-type stirring blade, a MIG-stirrer or high shear stirrer may be used for the preparation of the emulsion. An emulsion is rated stable according to the present invention when after generation of the emulsion no phase separation is observed at a storage temperature of 23°C within 6 h.

Mixing of components (a1) to (a4) may be carried out in any order or simultaneously. Any one component can be poured, sprayed, and/or blended with any one other component or with an already existing mixture of components. Mixing can be achieved by stirring, spraying, shaking or any physical mean in the vessels used for mixing which cause turbulences during the mixing process.

Component (a1) comprises a component A which is selected from the group of polymers consisting of polyethylene glycol vinyl acetate comb polymers, polycarboxylates, polyethers, polyaspartates, polyvinylpyrrolidone, polyamines, and polylysine.

Polyaspartates may be used either not neutralized, partially neutralized or fully neutralized with a base, preferably with ammonia or an alkaline hydroxide, more preferably with sodium hydroxide.

Examples for polyaspartates are given in WO2015036325 A1, WO2015036292 A1, WO2015036344 A1, US5508434 and in the literature cited herein.

Examples for polylysine are given in WO2007060119 A1 and WO2000043483 and in the literature cited herein.

Examples for polyethylene glycol vinyl acetate comb polymers are given in WO2007138053 and WO2013132042 and in the literature cited herein.

Polycarboxylates may be polymethacrylates and/or polyacrylates, either not neutralized, partially neutralized or fully neutralized with a base, with ammonium or an alkaline hydroxide, or with sodium hydroxide. Polycarboxylates may be polyacrylic acid, either not neutralized, partially neutralized or fully neutralized with a base, with ammonia or an alkaline hydroxide, or with sodium hydroxide. In one embodiment polycarboxylates may be polyacrylic acid, either partially or fully neutralized with sodium hydroxide.

In one embodiment, polyethers may be polyalkylene glycols, or polyethylene glycol.

In one embodiment, polyamines may be polyalkyleneimines, or polyethyleneimines.

Component (a1) may be characterized in that it is monophasic at 23°C. To determine if component (a1) is monophasic, component A is dissolved in water, stored at 23°C for 6 h followed by measurement of the turbidity index of the solution. The turbidity index is measured as described in ISO 7027:1999 (Water quality - determination of turbidity), and the resulting turbidity is expressed in Formazin Nephelometric Units (FNU). If the turbidity of the solution is equal or less than 20 FNU, the solution is considered monophasic. Additionally, component (a1) can be diluted with water in a weight ratio from 1 part component (a1) to 99 parts water to 99 parts component (a1) to 1 part water while remaining monophasic. Dilution of component (a1) with water is carried out on lab scale with the total volume of component (a1) and water used for dilution not exceeding 500 ml for practical purposes. Component (a1) and water are both tempered to 23°C. The sample of component (a1) is placed in a suitable beaker and stirred on a lab stirrer with a magnetic bar at 50 to 100 rpm. The amount of water to be added for the test is added within 5 to 20 s to component (a1) and the resulting diluted solution is stirred for 30 min. After stirring, the solution is stored for 6 h at 23°C, followed by measurement of the turbidity index of the solution as described above. If the turbidity of the solution is equal or less than 20 FNU, the solution is considered monophasic. To determine suitable polymers and their applicable concentration range in component (a1) a polymer can be dissolved in water at 23°C at different concentrations, the solutions being stored at 23°C for 6 h followed by measurement of the turbidity index of each solution. The turbidity index is measured as described above. If the turbidity of the solution is equal or less than 20 FNU, the solution is considered monophasic. All solutions with a polymer concentration lower than the highest concentration measured according to the method described above with a turbidity equal or less than 20 FNU can be used as component (a1) according to the present invention.

Solids content of component A may bedetermined with an Ohaus Halogen Moisture Analyzer. The instrument operates on thermogravimetric principle by measuring the weight of the sample while heating it at 140°C until equilibrium weight is obtained. Solids content is calculated by dividing the sample weight prior drying by the equilibrium sample weight after drying and expressed in percent of weight. Solids content of component A in component (a1) is in the range of from 0.1 to 70 %, preferably in the range of from 1% to 60%, more preferable in the range of from 5% to 50% and most preferably in the range of from 10% to 40% by weight.

Component (a2) may be characterized in that it is monophasic at 23°C. Whether component (a2) is monophasic or not may be determined as described for component (1). Component (a2) contains water and a water-soluble component B. Component B is attributed the property "water-soluble" according to this description when a sample of 10 g of component B at dissolves completely in 100 g water at 23°C within 6 h while being stirred on a magnetic stirrer with a magnetic stirrer bar at 50 to 100 rpm. The turbidity index is measured as described in ISO 7027:1999 (Water quality - determination of turbidity), and the resulting turbidity is expressed in Formazin Nephelometric Units (FNU). If the turbidity of the solution is equal or less than 20 FNU, the component B is considered water-soluble.

Component B is different from component A used in component (a1).

In one embodiment of the invention, component B may be a water-soluble salt selected from the formula K^{(a+})_{b}N^{(b-)}ₐ, with the cation K selected from ammonium, potassium, sodium, magnesium, and calcium, and the anion N selected from sulfate, fluoride, chloride, bromide, iodide, phosphate, acetate, nitrate, and methanesulfonate, with a and b representing the absolute value of the charge of each ion as a natural number and the stoichiometric number for each ion in the salt. In one embodiment, cations may be selected from ammonium, potassium and sodium. In another embodiment cation may be ammonium. In one embodiment anions may be selected from sulfate and chloride. In another embodiment cation may be sulfate.

Solids content of component B in component (a2) may be determined with an Ohaus Halogen Moisture Analyzer. The instrument operates on thermogravimetric principle by measuring the weight of the sample while heating it at 140°C until equilibrium weight is obtained. Solids content is calculated by dividing the sample weight prior drying by the equilibrium sample weight after drying and expressed in percent of weight. Solids content of component B in component (a2) when component B is a water-soluble salt is at least 0.1 %, preferably at least 1%, more preferable a least 5%, and most at least 10% by weight.

In another embodiment of the present invention, component B may be a non-ionic surfactant selected from the group consisting of block copolymers based on ethylene oxide and propylene oxide and alkyl polyethylene glycol ethers. In one embodiment, the block copolymers of ethylene oxide and propylene oxide contain less than 80 ethylene oxide units. In another embodiment the block copolymers of ethylene oxide and propylene oxide contain less than 50 ethylene oxide units. In another embodiment the block copolymers of ethylene oxide and propylene oxide contain less than 25 ethylene oxide units. In one embodiment the alkyl polyethylene glycol ether may be selected from a group consisting of Guerbet-alcohol ethoxylates and fatty acid ethoxylates. Most preferably the alkyl polyethylene glycol ether is a C10-Guerbet alcohol ethoxylate.

Solids content of component B in component (a2) may be determined with an Ohaus Halogen Moisture Analyzer. The instrument operates on thermogravimetric principle by measuring the weight of the sample while heating it at 140°C until equilibrium weight is obtained. Solids content is calculated by dividing the sample weight prior drying by the equilibrium sample weight after drying and expressed in percent of weight. Solids content of component B in component (a2) when component B is a non-ionic surfactant is in the range of from 1 to 90 %, preferred in the range of from 10 to 85%, more preferred in the range of from 20 to 80 %, most preferred in the range of from 40 to 60 % by weight.

At least one monomer (a3) is used for the encapsulation of the emulsion formed in the aqueous biphasic system. In one embodiment at least one monomer (a3) may be selected from the group consisting of of C₁ to C₂₄-alkyl esters of acrylic acid, C₁ to C₂₄-glycidyl esters of acrylic acid, C₁ to C₂₄-alkyl esters of methacrylic acid, C₁ to C₂₄-glycidyl esters of methacrylic acid, acrylic acid esters with hydroxylic groups, acrylic acid esters with carboxylic groups, methacrylic acid esters with hydroxylic groups, methacrylic acid esters with carboxylic groups, allylgluconamide, and monomers having two or more ethylenically unsaturated double bonds in the molecule.

In one embodiment of the present invention, the C₁ to C₂₄-alkyl esters of acrylic or methacrylic acid may be selected from the group consisting of methyl, ethyl, n-propyl and n-butyl acrylate.

In another embodiment of the present invention, glycidyl methacrylate may be selected.

In another embodiment of the present invention, the esters with hydroxylic groups of acrylic and methacrylic acid may be selected from the group consisting of 2-hydroxyethylacrylate, 2-hydrox-yethylmethacrylate,hydroxybutylacrylate, hydroxybutylmethacrylate, diethylene glycol monoacrylate, and diethylene glycol monomethacrylate.

In another embodiment of the present invention, monomers with two or more ethylenically unsaturated double bonds in the molecule may act as crosslinkers. Examples for monomers with two ethylenically unsaturated double bonds in the molecule are divinylbenzene and divinylcyclohexane, and preferably the diesters of diols with acrylic acid or methacrylic acid, also the diallyl and divinyl ethers of these diols. Other examples are ethylene glycol diacrylate, ethylene glycol dimethacrylate, 1,3-butylene glycol dimethacrylate, diethylene glycol diacrylate, dipropylene glycol diacrylate, methallylmethacrylamide, allyl acrylate and allyl methacrylate. Particular preference is given to propanediol diacrylate, butanediol diacrylate, pentanediol diacrylate and hexanediol diacrylate and the corresponding methacrylates. Monomers with three or more, generally 3, 4 or 5, ethylenically unsaturated radicals are unsaturated radicals such as trimethyloipropane triacrylate and methacrylate, pentaerythritol triallyl ether, pentaerythritol tetraallyl ether, pentaerythritol triacrylate and pentaerythritol tetraacrylate, and their technical-grade mixtures. For example, as a rule, pentaerythritol tetraacrylate is present in technical-grade mixtures in a mixture with pentaerythritol triacrylate and small amounts of oligomerization products. In one embodiment monomers with two or more ethylenically unsaturated double bonds in the molecule may be selected from the group consisting of pentaerythritol triacrylate, butanediol diacrylate, and ethylene glycol dimethacrylate.

Monomer (a3) may be present in the ratio of monomer (a3) to component A in the range of from 0.1 to 60 weight-%, 1 to 50 weight-%, 2 to 40 weight-%, or 5 to 20 weight-%.

Polymerization initiators (a4) which can be used may be all compounds which disintegrate into free radicals under the polymerization conditions, e.g. peroxides, hydroperoxides, persulfates, azo compounds and the so-called redox initiators. Suitable thermally activatable free-radical initiators or the oxidative component of the redox initiator pair are in particular those of the peroxy and azo type. These include hydrogen peroxide, peracetic acid, t-butyl hydroperoxide, di-t-butyl peroxide, dibenzoyl peroxide, benzoyl hydroperoxide, 2,4-dichlorobenzoyl peroxide, 2,5-dimethyl-2,5-bis(hydroperoxy)hexane, perbenzoic acid, t-butyl peroxypivalate, t-butyl peracetate, dilauroyl peroxide, dicapryloyl peroxide, distearoyl peroxide, dibenzoyl peroxide, diisopropyl peroxydicarbonate, didecyl peroxydicarbonate, dieicosyl peroxydicarbonate, di-t-butyl perbenzoate, azobisisobutyronitrile, 2,2'-azobis-2,4-dimethylvaleronitrile, 2,2'-azobis-(2-amidinopropane) dihydrochloride, 2,2'-azobis(N, Ndimethylisobutyramidine dihydrochloride, 2-(carbamoylazo)isobutyronitrile, 4,4'-azobis(4-cyanovaleric acid), and 2,2'-azobis[2-(2-imidazolin-2-yl)propane] dihydrochloride, ammonium persulfate, potassium persulfate, sodium persulfate and sodium perphosphate. In some cases, it is advantageous to use mixtures of different polymerization initiators, e.g. mixtures of hydrogen peroxide and sodium or potassium peroxodisulfate. Mixtures of hydrogen peroxide and sodium peroxodisulfate can be used in any desired ratio.

Redox initiators mean initiator systems which comprise an oxidizing agent, for example a salt of peroxodisulfuric acid, hydrogen peroxide or an organic peroxide such as tert-butyl hydroperoxide, and a reducing agent. Examples for reducing agents are sulfur compound such as sodium hydrogensulfite, sodium hydroxymethanesulfinate and the hydrogensulfite adduct to acetone, nitrogen and phosphorus compounds such as phosphorous acid, hypophosphites and phosphinates, ditert-butyl hyponitrite and dicumyl hyponitrite, and also hydrazine and hydrazine hydrate and ascorbic acid. Redox initiator systems may comprise an addition of small amounts of redox metal salts such as iron salts, vanadium salts, copper salts, chromium salts or manganese salts, for example the ascorbic acid/iron(II) sulfate/sodium peroxodisulfate redox initiator system.

In one embodiment initiators or mixtures of initiators are selected from the group consisting of peroxides, hydroperoxides, persulfates, azo compounds, and redox initiators. In one embodiment the initiator may be selected from the group consisting of hydrogen peroxide, the redox initiator ascorbic acid/iron(II) sulfate with hydrogen peroxide, and 2,2'-azobis[2-(2-imidazolin-2-yl)propane] dihydrochloride. The specified polymerization initiators may be used in customary amounts, e.g. in amounts of from 0.01 to 5, preferably 0.1 to 2.5 mol-%, based on the monomers to be polymerized.

During the polymerization of monomer (a3), both phases formed out of components (a1) and (a2) in the aqueous biphasic system may be monophasic.

The polymerization of the biphasic water-in-water system may be performed typically at 20 to 100°C, preferably at 40 to 90°C. Typically, the polymerization is undertaken at standard pressure, but can also be effected at elevated or reduced pressure, for example in the range from 0.5 to 20 bar. The rate of polymerization can be controlled in a known manner through the selection of the temperature and of the amount of polymerization initiator. On attainment of the polymerization temperature, the polymerization is appropriately continued for a further period, for example 2 to 6 hours, in order to complete the conversion of the monomers.

Particular preference may be given to a mode of operation in which, during the polymerization, the temperature of the polymerizing reaction mixture is varied continuously or periodically, for example increased continuously or periodically. This is done, for example, with the aid of a program with rising temperature.

For this purpose, the total polymerization time can be divided into two or more periods. The first polymerization period is characterized by a slow decomposition of the polymerization initiator. In the second polymerization period and any further polymerization periods, the temperature of the reaction mixture is increased, in order to accelerate the decomposition of the polymerization initiators. The temperature can be increased in one step or in two or more steps, or continuously in a linear or nonlinear manner. The temperature difference between the start and the end of the polymerization may be up to 60°C. In general, this difference is 3 to 40°C, preferably 3 to 30°C.

The microcapsule dispersions obtained by one of the procedures outlined above may subsequently be spray dried in a customary manner. To facilitate the redispersion of the spray dried microcapsules, additional amounts of emulsifier and/or protective colloid can optionally be added to the dispersions before the spray drying. Suitable emulsifiers and protective colloids are those specified above in connection with the production of the microcapsule dispersions. In general, the aqueous microcapsule dispersion is atomized in a hot air stream which is conducted in co-current or counter-current, preferably in co-current, with the spray mist. The inlet temperature of the hot air stream is typically in the range from 100 to 200°C, preferably 120 to 160°C, and the outlet temperature of the air stream is generally in the range from 30 to 90°C, preferably 60 to 80°C. The aqueous microcapsule dispersion can be sprayed, for example, by means of one-substance or multisubstance nozzles, or by means of a rotating disk.
The spray dried microcapsules are normally deposited using cyclones or filter separators.

Optionally, at least one process additive may be added to aqueous biphasic system. In one embodiment, the process additive may be a protective colloid. In one embodiment the process additive may be selected from the group consisting of inulin, alkyl polyglycosides, and carboxyalkyl celluloses. In one embodiment the process additive may be selected from the group consisiting of carboxymethylcellulose, C8-10 alkyl glucosides, and inulin lauryl carbamate. At least one process additive may be added during any or all of the steps (a), (b) and/or (c).

Optionally, at least one enzyme may be added to component (a1).

Enzymes may be used with different concentrations of active enzyme protein in the total enzyme.

The ratio of the weight of total enzyme to the weight of total polymer in the microcapsule may be in the range of from 10 : 1 to 1 : 10000, 9 : 1 to 1 : 500, 5 : 1 to 1 : 200, or 1.5 : 1 to 1 : 100.

In one embodiment, the amount of active enzyme protein based on total polymer in the microcapsules is in the range of from 0.1 to 20 % of weight, 0.1 to 15 % of weight, 0.2 to 10 % of weight, or 1.0 to 5 % of weight.

Examples of suitable enzymes include, but are not limited to, hemicellulases, peroxidases, proteases, cellulases, xylanases, lipases, phospholipases, esterases, cutinases, pectinases, mannanases, pectate lyases, keratinases, reductases, oxidases, phenoloxidases, lipoxygenases, ligninases, pullulanases, tannases, pentosanases, malanases, β-glucanases, arabinosidases, hyaluronidases, chondroitinases, laccases, nucleases and amylases, or mixtures thereof.

In one embodiment preferred enzymes may include a protease. Suitable proteases include metalloproteases and serine proteases, including neutral or alkaline microbial serine proteases, such as subtilisins (EC 3.4.21.62). Suitable proteases include those of animal, vegetable or microbial origin. In one aspect, such suitable protease may be of microbial origin. The suitable proteases include chemically or genetically modified mutants of the aforementioned suitable proteases. In one aspect, the suitable protease may be a serine protease, such as an alkaline microbial protease or/and a trypsin-type protease. Examples of suitable neutral or alkaline proteases include:
(a) subtilisins (EC 3.4.21.62), including those derived from Bacillus, such as Bacillus lentus, B. alkalophilus, B. subtilis, B. amyloliquefaciens, Bacillus pumilus and Bacillus gibsonii as described in U.S. Pat. No. 6,312,936 B1, U.S. Pat. No. 5,679,630, U.S. Pat. No. 4,760,025, U.S. Pat. No. 7,262,042 and WO09/021867. The main representatives are the subtilisins from Bacillus amyloliquefaciens (called BPN') and Bacillus licheniformis (called subtilisin Carlsberg), the serine protease PB92, subtilisin 147 and/or 309 (sold under the trade name Savinase® by Novozymes A / S, Bagsvaerd , Denmark) and subtilisin from Bacillus lentus, especially from Bacillus lentus (DSM 5483) and each of the variants available via mutagenesis of these enzymes Examples as described in WO 89/06276 and EP 0 283 075, WO 89/06279, WO 89/09830, WO 89/09819 and WO9106637. Proteases of the subtilisin type (subtilases, subtilopeptidases, EC 3.4.21.62, valid as of September 9, 2014) are classed as belonging to the serine proteases, due to the catalytically active amino acids. They are naturally produced and secreted by microorganisms, in particular by Bacillus species. They act as unspecific endopeptidases, i.e. they hydrolyze any acid amide bonds located inside peptides or proteins. Their pH optimum is usually within the distinctly alkaline range. A review of this family is provided, for example, in the paper "Subtilases: Subtilisin-like Proteases" by R. Siezen, pages 75-95 in "Subtilisin enzymes", edited by R. Bott and C. Betzel, New York, 1996. Subtilisins are suitable for a multiplicity of possible technical uses, in particular as active ingredients of detergents or cleaning agents. The class of serine proteases shares a common amino acid sequence defining a catalytic triad which distinguishes them from the chymotrypsin related class of serine proteases.
(b) trypsin-type or chymotrypsin-type proteases, such as trypsin (e.g., of porcine or bovine origin), including the Fusarium protease described in WO 89/06270 and the chymotrypsin proteases derived from Cellumonas as described in WO 05/052161 and WO 05/052146.
   The subtilisins and chymotrypsin related serine proteases both have a catalytic triad comprising aspartate, histidine and serine. In the subtilisin related proteases the relative order of these amino acids, reading from the amino to carboxy terminus is aspartatehistidine-serine. In the chymotrypsin related proteases the relative order, however is histidine-aspartateserine. Thus, subtilisin herein refers to a serine protease having the catalytic triad of subtilisin related proteases.
(c) metalloproteases, including those derived from Bacillus amyloliquefaciens described in WO 07/044993A2., neutral protease NprE (EC:3.4.24.28) described in US 20110104786 A1 and proteinase T (Thermolysin) described in EP 2205732 A2 (Danisco US Inc., now DuPont Nutrition & Health)

Suitable commercially available protease enzymes include those sold under the trade names ALCALASE®, SAVINASE®, PRIMASE®, DURAZYM®, POLARZYME®, KANNASE®, LIQUA-NASE®, LIQUANASE ULTRA®, SAVINASE ULTRA®, OVOZYME®, NEUTRASE®, EVER-LASE® and ESPERASE® by Novozymes A/S (Denmark), those sold under the tradename MAXATASE®, MAXACALI®, MAXAPEM®, PROPERASE®, PURAFECT® (EFFECTENZ™ P), PURAFECT PRIME® (PREFERENZ™ P), PURAFECT OX®, FN3®, FN4®, EXCELLASE® (EXCELLENCE™ P) andPURAFECT OXP®by Genencor International, those sold under the tradename OPTICLEAN® and OPTIMASE® by Solvay Enzymes.

Suitable alpha-amylases include those of bacterial or fungal origin. Chemically or genetically modified mutants (variants) are included. A preferred alkaline alpha-amylase is derived from a strain of Bacillus, such as Bacillus licheniformis, Bacillus amyloliquefaciens, Bacillus stearothermophilus, Bacillus subtilis, or other Bacillus sp., such as Bacillus sp. NCIB 12289, NCIB 12512, NCIB 12513, DSM 9375 (U.S. Pat. No. 7,153,818) DSM 12368, DSMZ no. 12649, KSM AP1378 (WO 97/00324), KSM K36 or KSM K38 (EP 1,022,334).

Suitable commercially available alpha-amylases include DURAMYL®, LIQUEZYME®, TERMAMYL®, TERMAMYL ULTRA®, NATALASE®, SUPRAMYL®, STAINZYME®, STAINZYME PLUS®, FUNGAMYL®, AMPLIFY®and BAN® (Novozymes A/S, Bagsvaerd, Denmark), KEMZYM® AT 9000 Biozym Biotech Trading GmbH Wehlistrasse 27b A-1200 Wien Austria, RAPIDASE®, PURASTAR® (EFFECTENZ™ S), ENZYSIZE®, OPTISIZE HT PLUS®, POWERASE® and PURASTAR OXAM® (Genencor International Inc., Palo Alto, Calif., now part of Du Pont Nutrition & Health) and KAM® (Kao, 14-10 Nihonbashi Kayabacho, 1-chome, Chuo-ku Tokyo 103-8210, Japan). In one aspect, suitable amylases include NATALASE®, STAINZYME® and STAINZYME PLUS® and mixtures thereof.

In one embodiment of the invention, such enzymes may be selected from the group consisting of: lipases, including "first cycle lipases" such as those described in U.S. Pat. No. 6,939,702 B1 and US PA 2009/0217464. In one aspect, the lipase is a first-wash lipase, preferably a variant of the wild-type lipase from Thermomyces lanuginosus comprising one or more of the T231 R and N233R mutations. The wild-type sequence is the 269 amino acids (amino acids 23-291) of the Swissprot accession number Swiss-Prot 059952 (derived from Thermomyces lanuginosus (Humicola lanuginosa)). Preferred lipases would include those sold under the tradenames LI-PEX® and LIPOLEX®.

In one aspect, other preferred enzymes may include microbial-derived endoglucanases exhibiting endo-beta-1,4-glucanase activity (E.C. 3.2.1.4), including a bacterial polypeptide endogenous to a member of the genus Bacillus which has a sequence of at least 90%, 94%, 97% and even 99% identity to the amino acid sequence SEQ ID NO:2 in U.S. Pat. No. 7,141,403B2) and mixtures thereof. Suitable endoglucanases are sold under the tradenames CELLUCLEAN® and WHITEZYME® (Novozymes A/S, Bagsvaerd, Denmark).

In another embodiment enzymes may include pectate lyases sold under the tradenames PEC-TAWASH®, PECTAWAY®, XPECT® and mannanases sold under the tradenames MANNA-WAY® (all from Novozymes A/S, Bagsvaerd, Denmark), and PURABRITE®, MANNASTAR® (Genencor International Inc., Palo Alto, Calif.).

In one embodiment enzymes may be selected from the group consisting of oxireductases, transferases, hydrolases, lyases, isomerases and lipases.

The present invention further comprises microcapsules prepared according to the process described above.

The present invention further comprises aqueous dispersions of microcapsules prepared according to the process described above, wherein the microcapsules comprise (I) at least 1 % by weight of water and (II) an enzyme selected from the group consisting of oxireductases, transferases, hydrolases, lyases, isomerases and lipases and
where the microcapsule has an average particle size of less than 35 µm.

The water content of the microcapsules may be determined as follows: The microcapsules of the aqueous dispersion are separated from the water by filtration and dried at 40°C under atmospheric pressure for 12 hours. The sample is transferred into a Metrohm 860KF Thermoprep unit linked to a Coulometer 831 KF. The sample is heated to 140°C, the resulting water vapor is removed by a constant stream of nitrogen gas and transferred into the titration unit. The water content is determined by Karl-Fischer titration.

The water content of the microcapsules may be at least 1 % by weight, 5 % by weight, 10 % by weight, or 20 % by weight.

Turbidity may be measured in Formazin Nephelometric Units as follows: Turbidity may be measured using Trübungsphotometer LTP 4 from Hach as described in ISO 7027:1999. Formazin primary standards with particle size range 0.01 to 10.0 µm being used for the calibration. The standard is prepared using clean Class A glassware and is diluted with RO/DI water. Each measured sample is thoroughly mixed immediately prior to measurement.

The average particle size may be determined by the following methods:

Measurement of average particle size by using a Malvern The particle size of the microcapsule dispersion was determined using a Malvern Particle Sizer model 3600E or a Malvern Master-sizer 2000. The D10 value means that 10% of the particles have a particle size (in accordance with the volume average) up to this value. Accordingly, D50 means that 50% of the particles and D90 means that 90% of the particles have a particle size (according to the volume average) less than/equal to this value.

Measurement of average particle size by using light microscopy may be carried out as follows: The microcapsules size (arithmetic mean, sum of all sizes divided by the number of particles) may be determined by optical microscopy (Leica DM 5000 B) and diameter measurements from 3 batches (in each batch 100 capsules were measured). Diameter measurements is conducted with known software for scientific image analysis (Leica Application Suite V3.8). D50 means that 50% of the particles have a particle size less than/equal to this value.

Average particle size of the microcapsules measured by light microscopy may be less than 35 µm, less than 25 µm, less than 20 µm, or less than 10 µm.

The aqueous dispersion preferably may comprise microcapsules with a core-shell structure. The shell may be formed by the polymerization of at least one monomer (a3). In one embodiment, the resulting polymer forming the shell may be a polymer which is insoluble in water in the pH range of from 1 to 12 in a time interval of one hour. The insolubility of the polymer is determined by size-exclusion chromatography (SEC) using SUPREMA combination ultrahigh (PSS) chromatographie columns. The polymer analysis is performed in aqueous buffer eluent. The calibration is obtained with narrow molar mass standards (Pullulan, molar mass range 342-2560000 g/mol, PSS).

The microcapsules according the present invention may be used for example for typical fabric and home care applications.

### Description of the figure

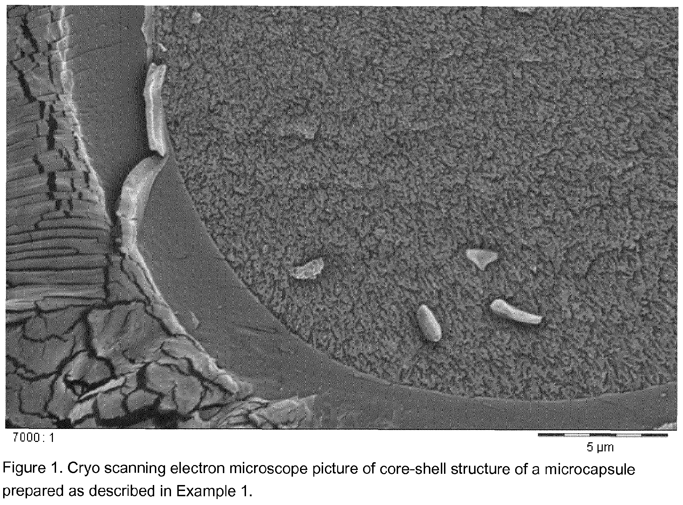

Figure 1 shows a cryo scanning electron microscope picture of the core-shell structure of a microcapsule prepared as described in Example 1.

### Examples:

The following abbreviations are used for the description of the examples:
Pluronic® PE6200 - block copolymer of propylene oxide and ethylene oxide
PEG/VAC - polyethylene glycol and vinyl acetate graft copolymer
Walocel™ CRT 2000 PA - carboxymethylcellulose
Savinase Ultra 16L - liquid protease enzyme with 4-formylphenylboronic acid
MMA-methyl methacrylate
EHA - ethylhexyl acrylate
DMAA- N,N-dimethylacrylamide
MAA - methacrylic acid
Laromer® TMPTA - Trimethylolpropane triacrylate
Wako VA 44 - 2,2'-Azobis[2-(2-imidazolin-2-yl)propane]dihydrochloride
Plantacare 818® UP - coco-glucoside
Inutec SL 1 - inulin lauryl carbamate
Trilon C - pentasodium salt of diethylenetriamine-pentaacetic acid (DTPA-Na5)

### Procedure for Example 1:

A premix (I) was prepared from component (a1) and process additives. Premix (I), component (a2) and monomer(s) (a3) were combined and emulsified with the help of a high shear mixer at 20000 rpm for 1 minute at room temperature. The reaction mixture was then transferred to a reactor equipped with an anchor stirrer and it was agitated at a speed of 250 rpm. After 5 minutes of stirring, initiator(s) (a4) were added to the reaction mixture within 1 minute. Temperature of the reaction mixture was increased from room temperature to 50 °C (during 10 minutes). The temperature was kept at 50 °C for 24 hours. The stirring speed was then decreased to 100 rpm. The capsule dispersion was cooled down to room temperature.

### Procedure for Examples 2-7:

A premix (I) was prepared from component (a1) and process additives. Premix (I), component (a2) and monomer(s) (a3) were combined and emulsified with the help of a high shear mixer at 20000 rpm for 1 minute at room temperature. The reaction mixture was then transferred to a reactor equipped with an anchor stirrer and it was agitated at a speed of 250 rpm. After 5 minutes of stirring, Trilon C, 50% of the total ascorbic acid amount, iron (II) sulfate heptahydrate and 50% of the total hydrogen peroxide amount were added successively to the reaction mixture within 1 minute. Temperature of the reaction mixture was increased from room temperature to 30 °C (during 10 minutes). The temperature was kept at 30 °C for 4 hours. Afterwards the second half of the ascorbic acid amount and hydrogen peroxide was added successively. The reaction mixture was stirred at 30 °C for additional 6 hours. The stirring speed was then decreased to 100 rpm and the capsules dispersion was cooled down to room temperature.

**Table 1. Examples 1 to 9.**

| **Example** | **Component (a1)** (disperse phase) | | **Component (a2)** (continuous phase) | | **Monomer(s)** (**a3**) | | **Initiator(s) (a4)** | | **Process additives** | |
|---|---|---|---|---|---|---|---|---|---|---|
| **1** | Pluronic® PE6200 | 45g | 40% aq. ammonium sulfate | 98g | MMA | 2g | Wako VA 44 | 0,26g | Inutec SL 1 | 15,9g |
| | | | | | EHA | 2g | | | | |
| | | | | | Laromer® TMPTA | 1g | | | | |
| **2** | Pluronic® PE6200 | 22,5g | 40% aq. ammonium sulfate | 98g | MMA | 2g | Trilon C | 0,01g | Inutec SL 1 | 15,9g |
| | | | | | EHA | 2g | Ascorbic acid | 0,08g | | |
| | Savinase Ultra 16 L | 22,5g | | | Laromer® TMPTA | 1g | Iron(II)sulfate heptahydrate | 3g | | |
| | | | | | | | Hydrogen peroxide | 0,04g | | |
| **3** | Pluronic® PE6200 | 22,5g | 40% aq. ammonium sulfate | 98g | DMAA | 2, 5g | Trilon C | 0,01g | Inutec SL 1 | 15,9g |
| | | | | | MAA | 2,5g | Ascorbic acid | 0,08g | | |
| | Savinase Ultra 16 L | 22,5g | | | | | Iron(II)sulfate heptahydrate | 3g | | |
| | | | | | | | Hydrogen peroxide | 0,04g | | |
| **4** | Pluronic® PE6200 | 22,5g | 40% aq. ammonium sulfate | 98g | DMAA | 2g | Trilon C | 0,01g | Inutec SL 1 | 15,9g |
| | | | | | MAA | 2g | Ascorbic acid | 0,08g | | |
| | Savinase Ultra 16 L | 22,5g | | | Laromer® TMPTA | 1g | Iron(II)sulfate heptahydrate | 3g | | |
| | | | | | | | Hydrogen peroxide | 0,04g | | |
| **5** | PEG/VAC | 40,5g | 40 % aq. ammonium sulfate | 105g | DMAA | 1,8g | Trilon C | 0,01g | Plantacare® 818 UP | 7,21g |
| | | | | | MAA | | Ascorbic acid | 0,08g | | |
| | | | | | Laromer® TMPTA | | Iron(II)sulfate heptahydrate | 3g | | |
| | | | | | | | Hydrogen peroxide | 0,04g | | |
| **6** | PEG/VAC | 4,05g | 40 % aq. ammonium sulfate | 100,4g | MMA | 1,8g | Trilon C | 0,01g | Plantacare® 818 UP | 7,21g |
| | Savinase Ultra 16 L | 36,45g | | | EHA | 1,8g | Ascorbic acid | 0,08g | | |
| | | | | | Laromer® TMPTA | 0,9g | Iron(II)sulfate heptahydrate | 3g | | |
| | | | | | | | Hydrogen peroxide | 0,04g | | |
| **7** | PEG/VAC | 4,05g | 40 % aq. ammonium sulfate | 100,4g | DMAA | 1,8g | Trilon C | 0,01g | Plantacare® 818 UP | 7,21g |
| | Savinase Ultra 16 L | 36,45g | | | MAA | 1,8g | Ascorbic acid | 0,08g | | |
| | | | | | Laromer® TMPTA | 0,9g | Iron(II)sulfate heptahydrate | 2,7g | | |
| | | | | | | | Hydrogen peroxide | 0,04g | | |

### Procedure for Comparative Example 1.

A premix (I) was prepared from component (a1) and process additives. Premix (I), component (a2) and monomer(s) (a3) were combined and emulsified with the help of a high shear mixer at 20000 rpm for 1 minute at room temperature. The reaction mixture was then transferred to a reactor equipped with an anchor stirrer and it was agitated at a speed of 250 rpm. After 5 minutes of stirring, initiators were added to the reaction mixture within 1 minute. Temperature of the reaction mixture was increased from room temperature to 50 °C (during 10 minutes). The temperature was kept at 50 °C for 24 hours. The stirring speed was then decreased to 100 rpm. The capsule dispersion was cooled down to room temperature.

**Table 2.Comparative Example 1.**

| **Comparative Example** | **Component (a1)** (disperse phase) | | **Component (a2)** (continuous phase) | | **Monomer(s) (a3)** | | **Initiator(s) (a4)** | | **Process additives** | |
|---|---|---|---|---|---|---|---|---|---|---|
| **CE1** | Pluronic PE6100 | 40,5g | 40% aq. ammonium sulfate | 102.15 g | MMA | 2.0 | Wako VA 44 | 0.26g | none | none |
| | WalocelTM CRT 2000 PA | 4,5g | | | EHA | 2.0g | | | | |
| | | | | | Laromer® TMPTA | 1.0g | | | | |

For Examples 1 to 7, stable dispersions of microcapsules formed. Comparative Example 1 resulted in no formation of microcapsules.

**Table 3. Average particle sizes and water content of the Examples 1 to 7.**

| **Example** | **Average particle size light microscope [µm]** | **Average particle size FBRM probe [µm]** | **Average particle size Malvern [µm]** | **Water content of dried microcap sules [weight %]** |
|---|---|---|---|---|
| 1 | | 48 | 6.2 | not determined |
| 2 | 5.0 | | | not determined |
| 3 | | 5.6 | 4.1 | not determined |
| 4 | 3.5 | 6.1 | | not determined |
| 5 | 8.1 | | | 3.9 |
| 6 | | 5.3 | | 7.5 |
| 7 | 3.6 | 10.0 | | 8.4 |

The turbidity in aqueous solutions of single components which were used in the examples above are summarized in Table 4.

**Table 4. Turbidity measured in FNUs**

| **Solution measured** | **FNU** |
|---|---|
| Sodium sulfate, 40 wt.-% aqueous solution | 0.6 |
| Pluronic PE6200, 40 wt.-% aqueous solution | 2.4 |
| Savinase Ultra 16L, 40 wt.-% aqueous solution | 1.2 |
| PEG/VAC, 40 wt.-% aqueous solution | 2.7 |

## Claims

1. Process for the preparation of microcapsules comprising the steps
(a) preparation of an aqueous biphasic system by mixing
(i) component (a1) comprising a component A selected from the group of polymers consisting of polyethylene glycol vinyl acetate comb polymers, polycarboxylates, polyethers, polyaspartates, polyvinylpyrrolidone, polyamines, and polylysine;
wherein component (a1) is a monophasic system at 23°C, and forms a monophasic system at 23°C if mixed with water in the range of from 1:99 to 99:1 by weight, and
(ii) component (a2) containing water and a water-soluble component B, wherein water-soluble component B is different from component A, and wherein (a2) is a monophasic system at 23°C, and
(iii) at least one monomer (a3), and
(iv) optionally at least one initiator (a4),
wherein (a1), (a2), (a3), and (a4) can be mixed together in any order or simultaneously, followed by
(b) optionally shearing of the biphasic system to form an emulsion, and
(c) polymerization of monomer (a3).

2. Process according to any one of the preceding claims wherein the solids content of component A in component (a1) is in the range of from 0.1 to 70 % by weight.

3. Process according to any one of the preceding claims wherein component B is a water-soluble salt selected from the formula K^{(a+)}_{b}N^{(b-)}ₐ, with the cation K selected from ammonium, potassium, sodium, magnesium, and calcium, and the anion N selected from sulfate, fluoride, chloride, bromide, iodide, phosphate, acetate, nitrate, and methanesulfonate, with a and b representing the absolute value of the charge of each ion as a natural number and the stoichiometric number for each ion in the salt.

4. Process according to claim 3 wherein component (a2) comprises at least 5 % by weight of a water-soluble salt.

5. Process according to any one of claims 1 or 2 wherein the component B is a surfactant with a solids content in the range of from 20 to 80 weight-%.

6. Process according to any one of claims 1, 2 or 5 wherein component B is a non-ionic surfactant selected from the group consisting of block copolymers based on ethylene oxide and propylene oxide and alkyl polyethylene glycol ethers.

7. Process according to any one of the preceding claims wherein a process additive selected from the group consisting of polysaccharides, such as inulin, alkyl polyglycosides, and carboxyalkylcellulose is added in any of the steps (a), (b), and/or (c).

8. Process according to any one of the preceding claims wherein component (a1) contains at least one enzyme.

9. Process according to claim 8 wherein the enzyme is selected from the group consisting of oxireductases, transferases, hydrolases, lyases, isomerases and ligases.

10. Process according to any one of the preceding claims wherein the monomer (a3) is selected from the group consisting of C₁ to C₂₄-alkyl esters of acrylic acid, C₁ to C₂₄-glycidyl esters of acrylic acid, C₁ to C₂₄-alkyl esters of methacrylic acid, C₁ to C₂₄-glycidyl esters of methacrylic acid, acrylic acid esters with hydroxylic groups, acrylic acid esters with carboxylic groups, methacrylic acid esters with hydroxylic groups, methacrylic acid esters with carboxylic groups, allylgluconamide, and monomers having two or more ethylenically unsaturated double bonds in the molecule.

11. Process according to any one of the preceding claims wherein the ratio of monomer (a3) to component A is in the range of from 0.1 to 60 weight-%.

12. Process according to any one of the preceding claims wherein the initiator or mixtures of initiators of step (a4) is selected from the group consisting of peroxides, hydroperoxides, persulfates, azo compounds, and redox initiators.

13. Microcapsules prepared according to the process of one of claims 1 to 12.

14. Aqueous dispersion of microcapsules prepared according to the process of one of claims 8 to 12, wherein the microcapsules comprise
(I) at least 1 % of water and
(II) an enzyme selected from the group consisting of oxireductases, transferases, hydrolases, lyases, isomerases and lipases, and
where the microcapsule has an average particle size of less than 35 pm measured by light microscopy.

15. Aqueous dispersion according to claim 14 wherein the shell of the microcapsule is a polymer that is insoluble in water in pH range of from 1 to 12 in time interval of 1 hour.

16. Aqueous dispersion according to claim 15 wherein the wall of the microcapsule is based on at least one monomer selected from the group consisting of C₁ to C₂₄-alkyl esters of acrylic acid, C₁ to C₂₄-glycidyl esters of acrylic acid, C₁ to C₂₄-alkyl esters of methacrylic acid, C₁ to C₂₄-glycidyl esters of methacrylic acid, acrylic acid esters with hydroxylic groups, acrylic acid esters with carboxylic groups, methacrylic acid esters with hydroxylic groups, methacrylic acid esters with carboxylic groups, allylgluconamide, and monomers having two or more ethylenically unsaturated double bonds in the molecule.
